# EUROPEAN PATENT APPLICATION

(11) **EP 4 764 784 A1**
(43) Date of publication of application: **24.06.2026**
(21) Application number: 24900806.1
(22) Date of filing: 27.09.2024
(51) Int. Cl.: G06F 1/26, G06F 1/28, H02M 1/10

(54) **ELECTRONIC DEVICE AND OPERATION METHOD OF ELECTRONIC DEVICE**

(30) Priority: 04.12.2023 KR 20230173443
(71) Applicant: Samsung Electronics Co., Ltd., Suwon-si, Gyeonggi-do 16677 (KR)
(72) Inventor: HAN, Changmin, Suwon-si, Gyeonggi-do 16677 (KR); KANG, Dongjin, Suwon-si, Gyeonggi-do 16677 (KR); KWON, Yeongjun, Suwon-si, Gyeonggi-do 16677 (KR); KIM, Beomsoo, Suwon-si, Gyeonggi-do 16677 (KR); JEONG, Gucheol, Suwon-si, Gyeonggi-do 16677 (KR)
(74) Representative: Appleyard Lees IP LLP
(86) International application number: PCT/KR2024/014790
(87) International publication number: WO 2025/121618

(57) **Abstract**

An electronic device is provided, including memory storing at least one instruction, at least one processor, a first power supply configured to provide first power to the at least one processor, based on power received from an external power source, and a second power supply configured to provide second power to an external electronic device, based on the power received from the external power source. The at least one processor is configured to execute the at least one instruction stored in the memory to cause the electronic device to identify whether the external electronic device is electrically connected to the electronic device, and, based on identifying that the external electronic device is electrically connected to the electronic device, provide the second power to the external electronic device through the second power supply.

## Description

### Technical Field

The disclosure relates to an electronic device and an operation method of the electronic device. More particularly, the disclosure relates to an electronic device that provides content, and an operation method of the electronic device.

### Background Art

With developments in electronic device technology, various electronic devices that provide content, such as videos and images, to users have been developed and widely used.

Recently, in order to provide additional computing functions to electronic devices including displays that provide content, a PC with an open pluggable specification (OPS) and technology for providing a computing function by installing a PC in an electronic device configured to have an interface that conforms to the OPS have been developed and widely used.

Technology for connecting an electronic device to a mini PC, a laptop, or a set-top box in addition to a PC with the OPS to provide content such as videos or images to the electronic devices through the mini PC, the laptop, etc. has also been developed and widely used.

### Disclosure of Invention

### Solution to Problem

According to an embodiment of the disclosure, an electronic device is provided. The electronic device may include memory storing at least one instruction. The electronic device may include at least one processor. The electronic device may include a first power supply configured to provide first power to the at least one processor, based on power received from an external power source. The electronic device may include a second power supply configured to provide second power to the external electronic device. The at least one processor may be configured to execute the at least one instruction stored in the memory to cause the electronic device to identify whether the external electronic device has been electrically connected to the electronic device. The at least one processor may be configured to execute the at least one instruction stored in the memory to cause the electronic device to provide the second power to the external electronic device through the second power supply, based on identifying that the external electronic device is electrically connected to the electronic device.

According to an embodiment of the disclosure, an operation method of an electronic device is provided. The operation method of the electronic device may include providing first power to at least one processor of the electronic device through a first power supply of the electronic device, based on power received from an external power source. The operation method of the electronic device may include identifying that whether an external electronic device is electrically connected to the electronic device. The operation method of the electronic device may include, based on identifying that the external electronic device is electrically connected to the electronic device, providing the second power to the external electronic device through a second power supply of the electronic device, based on the power received from the external power source.

According to an embodiment of the disclosure, there may be provided a computer-readable recording medium having recorded thereon a program for performing, on a computer, at least one of the operating methods according to the embodiments of the disclosure.

The technical problems to be addressed in this disclosure are not limited to the above-mentioned technical problems, and other technical problems not mentioned will be clearly understood by a person skilled in the art to which the disclosure pertains from the following description.

### Brief Description of Drawings

This disclosure may be readily understood by reference to the following detailed description and the accompanying drawings, in which reference numerals refer to structural elements.
FIG. 1 is a view for explaining an operation of an electronic device according to an embodiment of the disclosure.
FIG. 2 is a view for explaining an operation of the electronic device according to an embodiment of the disclosure.
FIG. 3 is a block diagram of a configuration of the electronic device according to an embodiment of the disclosure.
FIG. 4A is a flowchart for explaining an operation of the electronic device according to an embodiment of the disclosure.
FIG. 4B is a flowchart for explaining an operation according to whether power of an external electronic device is turned on or turned off, according to an embodiment of the disclosure.
FIG. 5 is a block diagram for explaining an operation and effect of the electronic device according to an embodiment of the disclosure.
FIG. 6 is a block diagram for explaining a configuration and operation of a second power supply according to an embodiment of the disclosure.
FIG. 7A is a block diagram for explaining an operation when power is provided to the external electronic device via the second power supply, according to an embodiment of the disclosure.
FIG. 7B is a block diagram for explaining an operation when provision of power to the external electronic device via the second power supply is stopped, according to an embodiment of the disclosure.
FIG. 8 is a block diagram for explaining an operation of determining connection or non-connection of the external electronic device and whether the power of the external electronic device is turned on or turned off, according to an embodiment of the disclosure.
FIG. 9A is a flowchart for explaining an operation according to a normal mode or standby mode of the electronic device, according to an embodiment of the disclosure.
FIG. 9B is a flowchart for explaining an operation according to a normal mode or standby mode of the electronic device, according to an embodiment of the disclosure.
FIG. 10 is a block diagram for explaining a power supply for providing power to an electronic device and an external electronic device, according to an embodiment of the disclosure.

### Mode for the Invention

Hereinafter, the terms used in the specification will be briefly described, and then the disclosure will be described in detail.

Although general terms widely used at present were selected for describing the disclosure in consideration of the functions thereof, these general terms may vary according to intentions of one of ordinary skill in the art, case precedents, the advent of new technologies, and the like. Terms arbitrarily selected by the applicant of the disclosure may also be used in a specific case. In this case, their meanings need to be given in the detailed description of an embodiment of the disclosure. Hence, the terms must be defined based on their meanings and the contents of the entire specification, not by simply stating the terms.

An expression used in the singular may encompass the expression of the plural, unless it has a clearly different meaning in the context. Unless otherwise defined, all terms (including technical and scientific terms) used herein have the same meaning as commonly understood by one of ordinary skill in the art to which this disclosure belongs.

The terms "comprises" and/or "comprising" or "includes" and/or "including" used herein specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The expression "configured to (or set to)" used therein may be used interchangeably with, for example, "suitable for", "having the capacity to", "designed to", "adapted to", "made to", or "capable of", according to situations. The expression "configured to (or set to)" may not only necessarily refer to "specifically designed to" in terms of hardware. Instead, in some situations, the expression "system configured to" may refer to a situation in which the system is "capable of" together with another device or parts. For example, the phrase "a processor configured (or set) to perform A, B, and C" may mean a dedicated processor (such as an embedded processor) for performing a corresponding operation, or a generic-purpose processor (such as a central processing unit (CPU) or an application processor (AP)) that can perform a corresponding operation by executing one or more software programs stored in memory.

When an element (e.g., a first element) is "coupled to" or "connected to" another element (e.g., a second element), the first element may be directly coupled to or connected to the second element, or, unless otherwise described, a third element may exist therebetween.

As used herein, the expressions "at least one of a, b or c" and "at least one of a, b and c" indicate "only a," "only b," "only c," "both a and b," "both a and c," "both b and c," and "all of a, b, and c."

Embodiments of the disclosure are described in detail herein with reference to the accompanying drawings so that this disclosure may be easily performed by one of ordinary skill in the art to which the disclosure pertains. An embodiment of the disclosure may, however, be embodied in many different forms and should not be construed as being limited to the embodiments set forth herein. In the drawings, parts irrelevant to the description are omitted for simplicity of explanation, and like numbers refer to like elements throughout.

Embodiments of the disclosure now will be described more fully hereinafter with reference to the accompanying drawings.

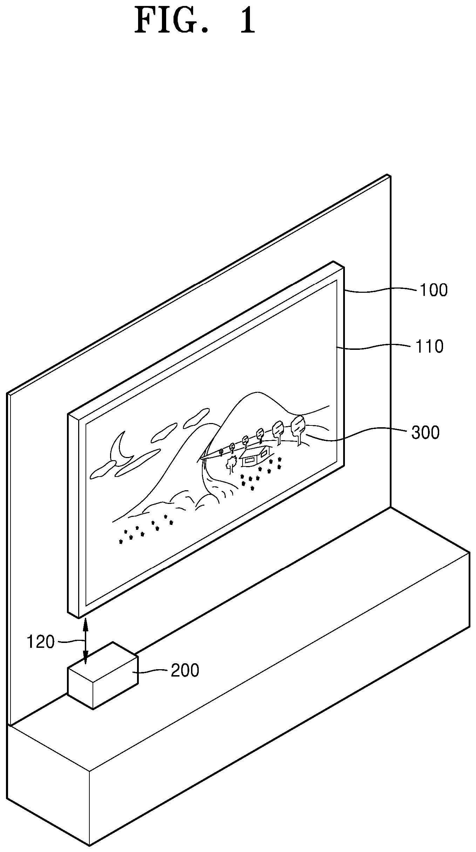

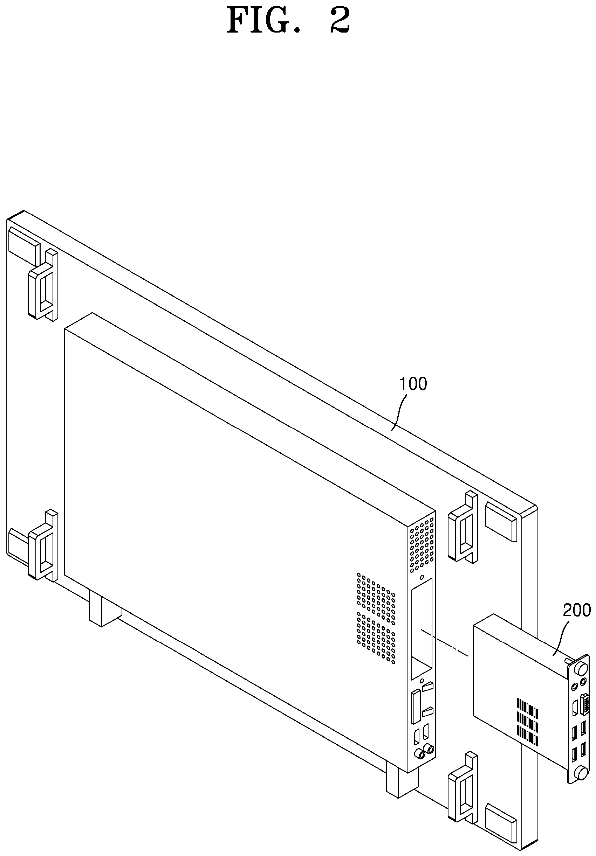

FIG. 1 is a view for explaining an operation of an electronic device 100 according to an embodiment of the disclosure. FIG. 2 is a view for explaining an operation of the electronic device 100 according to an embodiment of the disclosure.

Referring to FIG. 1, according to an embodiment of the disclosure, the electronic device 100 may provide content 300 to a user who uses the electronic device 100. According to an embodiment of the disclosure, the electronic device 100 may provide the content 300 to the user by displaying the content 300. The electronic device 100 may include a display 110 for displaying the content 300. The electronic device 100 may provide the content 300 to the user through the display 110.

According to an embodiment of the disclosure, the electronic device 100 is shown as having the shape of a television in FIG. 1. However, the disclosure is not limited thereto. The electronic device 100 may be implemented as display devices of various shapes, such as a digital signage, an electronic whiteboard, a projector, a mobile device, a smartphone, a laptop computer, a tablet PC, a wearable device, and a head mounted display (HMD) device.

However, the electronic device 100 according to the disclosure is not necessarily limited to having the display 110. According to an embodiment of the disclosure, the electronic device 100 may be implemented as an electronic device (such as, a set-top box or a PC) that provides the content 300 to an external device including an external display connected through communication or an input/output interface.

According to an embodiment of the disclosure, the electronic device 100 may be electrically connected to an external electronic device 200. According to an embodiment of the disclosure, the electronic device 100 may be electrically connected to the external electronic device 200 via an input/output interface 120. In FIG. 1, the input/output interface 120 is shown as being located between the electronic device 100 and the external electronic device 200, but the disclosure is not limited thereto. The input/output interface 120 may be located on the electronic device 100 or inside the electronic device 100.

According to an embodiment of the disclosure, the input/output interface 120 may include at least one of a High-Definition Multimedia Interface (HDMI) port, a Digital Visual Interface (DVI), a component jack, a PC port, or a Universal Serial Bus (USB) port. However, the disclosure is not limited thereto, and the input/output interface 120 may include various types of interfaces capable of electrically connecting the electronic device 100 to the external electronic device 200.

According to an embodiment of the disclosure, the electronic device 100 may obtain the content 300 from the external electronic device 200. The electronic device 100 may receive a still image, a video, or an audio signal from the external electronic device 200.

According to an embodiment of the disclosure, the electronic device 100 may be referred to as a sink device or a display device in that the electronic device 100 receives the content 300 from a source device such as the external electronic device 200.

Referring to FIG. 1, according to an embodiment of the disclosure, the external electronic device 200 may provide the content 300 to the electronic device 100. The external electronic device 200 may include a PC, mini PC, a set-top box, etc. The external electronic device 200 may be electrically connected to the electronic device 100 via the input/output interface 120.

According to an embodiment of the disclosure, the external electronic device 200 may be referred to as a source device or a content providing device in that the external electronic device 200 provides the content 300 to the electronic device 100.

Referring to FIG. 2, according to an embodiment of the disclosure, the external electronic device 200 may be a device following an open pluggable specification (OPS). The external electronic device 200 may be a PC following the OPS. According to an embodiment of the disclosure, the "OPS" may refer to a standardized hardware interface specification. The device following the OPS may have an interface with a standardized specification, and a power supply method.

According to an embodiment of the disclosure, the electronic device 100 may include a slot in which the external electronic device 200 is mountable. The external electronic device 200 may be mounted on the slot included in the electronic device 100, and may be electrically connected to the electronic device 100.

In FIG. 2, the slot on which the external electronic device 200 is to be mounted is shown as being located on a lateral surface of the electronic device 100. However, the disclosure is not limited thereto. According to an embodiment of the disclosure, the slot on which the external electronic device 200 is to be mounted may be located on an upper side or lower side of the electronic device 100. The electronic device 100 may include two or more slots.

According to an embodiment of the disclosure, the external electronic device 200 may be a device including a separate operating system (OS). According to an embodiment of the disclosure, the electronic device 100 may be electrically connected to the external electronic device 200 and thus may be operated using an OS included in the external electronic device 200. According to an embodiment of the disclosure, the electronic device 100 may be a device including a display, such as an electronic whiteboard, and may be operated using an OS included in the external electronic device 200 coupled to the electronic device 100.

According to an embodiment of the disclosure, the electronic device 100 may include a power supply. The power supply may be configured to provide first power to the electronic device 100. The power supply may also be configured to provide second power to the external electronic device 200 electrically connected to the electronic device 100.

According to an embodiment of the disclosure, the "first power" may include power consumption of the electronic device 100 that needs to be provided to the electronic device 100 while the electronic device 100 is being driven. According to an embodiment of the disclosure, the power consumption of the electronic device 100 may be power that needs to be provided to the electronic device 100 when the content 300 is provided through the electronic device 100.

According to an embodiment of the disclosure, the "first power" may include standby power of the electronic device 100, which is power consumed by the electronic device 100 while the electronic device 100 is not being driven.

According to an embodiment of the disclosure, the "second power" may include power consumption of the external electronic device 200 that needs to be provided to the external electronic device 200 while the external electronic device 200 is being driven.

According to an embodiment of the disclosure, the "second power" may include standby power of the external electronic device 200, which is power consumed by the external electronic device 200 while the external electronic device 200 is not being driven.

According to an embodiment of the disclosure, the power supply may be configured to provide the power consumption of the electronic device 100 and the power consumption of the external electronic device 200, while the electronic device 100 and the external electronic device 200 are being driven.

According to an embodiment of the disclosure, when power consumption is provided to the electronic device 100 through the power supply and power consumption is provided to the external electronic device 200 through the power supply, total power consumption of the electronic device 100 including the power supply may be a sum of the power consumption of the electronic device 100 and the power consumption of the external electronic device 200.

According to an embodiment of the disclosure, when the electronic device 100 and the external electronic device 200 are not driven, the power supply may be configured to provide standby power of the electronic device 100 and standby power of the external electronic device 200.

According to an embodiment of the disclosure, when standby power is provided to the electronic device 100 through the power supply and standby power is provided to the external electronic device 200 through the power supply, total power consumption of the electronic device 100 including the power supply may be a sum of the standby power of the electronic device 100 and the standby power of the external electronic device 200.

According to an embodiment of the disclosure, the external electronic device 200 may not be electrically connected to the electronic device 100. Even when the external electronic device 200 is electrically connected to the electronic device 100, the external electronic device 200 may be in a power-on state.

At this time, when the power supply included in the electronic device 100 provides the second power to the external electronic device 200 regardless of connection or non-connection of the external electronic device 200 or a power state of the external electronic device 200, the total power consumption or total standby power of the electronic device 100 may be unnecessarily increased.

Accordingly, in the disclosure, provision or non-provision of the second power to the external electronic device 200 via the power supply may be determined according to an electrical connection state between the electronic device 100 and the external electronic device 200 or a power-on state or power-off state of the external electronic device 200, and thus an unnecessary increase in the total power consumption or total standby power of the electronic device 100 may be prevented.

Effects obtainable from the disclosure are not limited to the aforementioned technical effects, and other effects not mentioned will be clearly understood by a person skilled in the art to which the disclosure pertains from the following description.

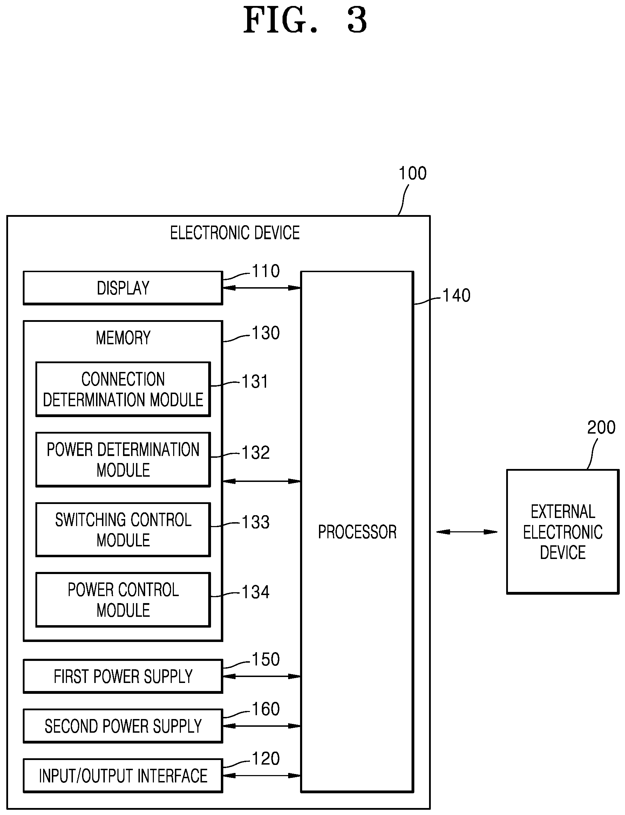

FIG. 3 is a block diagram of a configuration of the electronic device 100 according to an embodiment of the disclosure.

Referring to FIGS. 1 and 3, according to an embodiment of the disclosure, the electronic device 100 may include a display 110, the input/output interface 120, memory 130, at least one processor 140, a first power supply 150, and a second power supply 160. However, not all of the components illustrated in FIG. 3 are essential. The electronic device 100 may be implemented by more or less components than those illustrated in FIG. 3. The display 110, the input/output interface 120, the memory 130, the at least one processor 140, the first power supply 150, and the second power supply 160 may be electrically and/or physically connected to each other.

According to an embodiment of the disclosure, the display 110 may include one display from among a liquid crystal display, a plasma display, organic light-emitting diodes (OLEDs), inorganic light-emitting diodes (ILEDs), micro light-emitting diodes, and a quantum dot-organic light-emitting diode (QD-OLED) display. However, the disclosure is not limited thereto, and the display 110 may include other types of displays capable of providing the content 300 to users.

According to an embodiment of the disclosure, instructions, a data structure, and program code readable by the at least one processor 140 may be stored in the memory 130. Operations performed by the at least one processor 140 may be implemented by executing the instructions or codes of a program stored in the memory 130. According to an embodiment of the disclosure, the memory 130 may be at least one memory.

According to an embodiment of the disclosure, the memory 130 may include at least one of a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), mask ROM, flash ROM, a hard disk drive (HDD), or a solid state drive (SSD).

According to an embodiment of the disclosure, the memory 130 may store instructions or program codes for performing functions or operations of the electronic device 100. The instructions, algorithm, data structure, program code, and application program stored in the memory 130 may be implemented in, for example, programming or scripting languages such as C, C++, Java, assembler, and the like.

According to an embodiment of the disclosure, the memory 130 may store various types of modules that may be used to determine whether to provide the second power to the external electronic device 200 through the second power supply 160. The memory 130 may store a connection determination module 131, a power determination module 132, a switching control module 133, and a power control module 134. However, not all of the modules illustrated in FIG. 3 are essential. More or fewer modules than those shown in FIG. 3 may be stored in the memory 130.

According to an embodiment of the disclosure, a 'module' included in the memory 130 may refer to a unit in which a function or operation performed by the at least one processor 140 is processed. The 'module' included in the memory 130 may be implemented as software, such as instructions, an algorithm, a data structure, or program code.

According to an embodiment of the disclosure, the connection determination module 131 may be composed of instructions or program code related to an operation or function of determining whether the electronic device 100 and the external electronic device 200 have been electrically connected to each other.

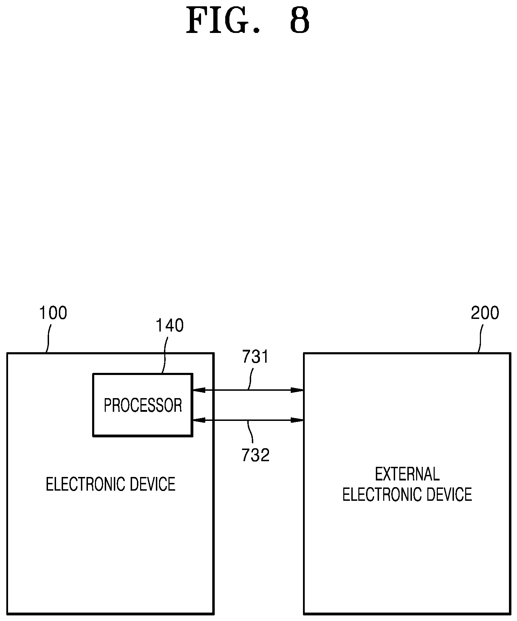

According to an embodiment of the disclosure, the at least one processor 140 may determine whether the external electronic device 200 has been electrically connected to the electronic device 100, by executing the instructions or program code of the connection determination module 131. The connection determination module 131 will be described in detail later with reference to FIG. 8.

According to an embodiment of the disclosure, the power determination module 132 may be composed of instructions or program code related to an operation or function of determining whether the power of the external electronic device 200 has been turned on or turned off. According to an embodiment of the disclosure, the at least one processor 140 may determine whether the power of the external electronic device 200 has been turned on or turned off, by executing the instructions or program code of the power determination module 132. The power determination module 132 will be described in detail later with reference to FIG. 8.

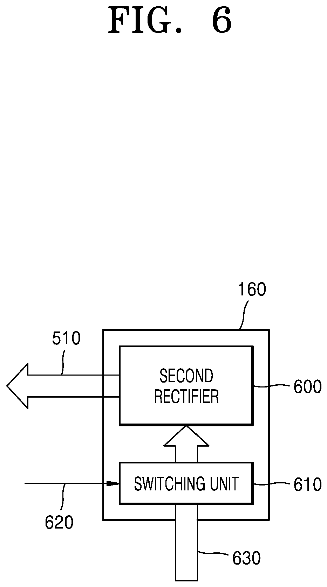

According to an embodiment of the disclosure, the switching control module 133 may be composed of instructions or program code related to an operation or function of determining whether to turn on or turn off a switching unit 610 (see FIG. 6) included in the second power supply 160.

According to an embodiment of the disclosure, the switching control module 133 may be composed of instructions or program code related to an operation or function of turning off the switching unit 610, as it is determined through the connection determination module 131 that the electronic device 100 and the external electronic device 200 have not been electrically connected to each other.

According to an embodiment of the disclosure, the switching control module 133 may be composed of instructions or program code related to an operation or function of turning off the switching unit 610, as it is determined through the power determination module 132 that the power of the external electronic device 200 has been turned off.

According to an embodiment of the disclosure, the switching control module 133 may be composed of instructions or program code related to an operation or function of turning on the switching unit 610, as it is determined through the connection determination module 131 that the electronic device 100 and the external electronic device 200 have been electrically connected to each other and it is determined through the power determination module 132 that the power of the external electronic device 200 has been turned on.

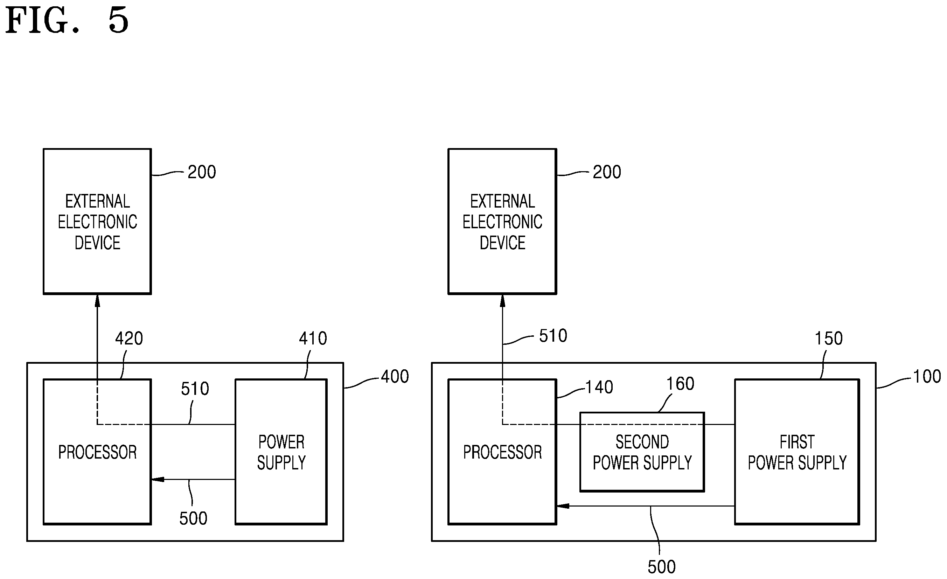

According to an embodiment of the disclosure, the at least one processor 140 may turn on or turn off the switching unit 610 included in the second power supply 160, by executing the instructions or program code of the switching control module 133. The switching unit 610 and an turn-on or turn-off operation of the second power supply 160 according to the turn-on or turn-off operation of the switching unit 610 will be described later with reference to FIGS. 5 through 7B.

According to an embodiment of the disclosure, the power control module 134 may be composed of instructions or program code related to an operation or function of providing first power to the electronic device 100 through the first power supply 150. According to an embodiment of the disclosure, the power control module 134 may be composed of instructions or program code related to an operation or function of providing power for operating various components included in the electronic device 100 through the first power supply 150.

According to an embodiment of the disclosure, the power control module 134 may be composed of instructions or program code related to an operation or function of providing second power to the external electronic device 200 through the second power supply 160. According to an embodiment of the disclosure, the power control module 134 may be composed of instructions or program code related to an operation or function of providing corresponding power to the external electronic device 200 through the second power supply 160 according to the connection state of the external electronic device 200 or the power state of the external electronic device 200.

According to an embodiment of the disclosure, the at least one processor 140 may control the operation of providing the first power to the electronic device 100 through the first power supply 150, by executing the instructions or program code of the power control module 134. The at least one processor 140 may control the operation of providing the second power to the external electronic device 200 through the second power supply 160, by executing the instructions or program code of the power control module 134.

According to an embodiment of the disclosure, the processor 140 may include, but is not limited to, at least one of a central processing unit, a microprocessor, a graphics processing unit, an application processor (AP), application specific integrated circuits (ASICs), digital signal processors (DSPs), digital signal processing devices (DSPDs), programmable logic devices (PLDs), or field programmable gate arrays (fPGAs).

According to an embodiment of the disclosure, the at least one processor 140 may include a circuitry such as a system on chip (SoC) or an integrated circuit (IC).

According to an embodiment of the disclosure, the at least one processor 140 may execute various types of modules stored in the memory 130. According to an embodiment of the disclosure, the at least one processor 140 may execute at least one of the connection determination module 131, the power determination module 132, the switching control module 133, or the power control module 134. According to an embodiment of the disclosure, the at least one processor 140 may execute at least one instruction that constitutes the various types of modules stored in the memory 130.

According to an embodiment of the disclosure, the at least one processor 140 may include a plurality of processors.

The at least one of the connection determination module 131, the power determination module 132, the switching control module 133, or the power control module 134 stored in the memory 130 may be executed by one of the plurality of processors. The remaining modules among the connection determination module 131, the power determination module 132, the switching control module 133, or the power control module 134 stored in the memory 130 may be executed by another one of the plurality of processors.

According to an embodiment of the disclosure, a power supply may include the first power supply 150 and the second power supply 160. According to an embodiment of the disclosure, the first power supply 150 may provide the first power to the electronic device 100 under a control by the at least one processor 140.

According to an embodiment of the disclosure, the first power supply 150 may be connected to an external power source, and transmit the first power to the electronic device 100, based on power received from the external power source. According to an embodiment of the disclosure, the first power supply 150 may include a switching-mode power supply (SMPS).

According to an embodiment of the disclosure, the first power supply 150 may be charged by receiving power from the external power source, and may transmit the charged power to the electronic device 100.. According to an embodiment of the disclosure, even when the first power supply 150 is not connected to the external power source, the first power supply 150 may transmit pre-charged power to the electronic device 100. According to an embodiment of the disclosure, the first power supply 150 may include a battery.

According to an embodiment of the disclosure, an operation of the electronic device 100 may be performed through the first power received via the first power supply 150. According to an embodiment of the disclosure, an operation of the electronic device 100 (for example, an operation of displaying the content 300 or an operation of determining whether to transmit the second power to the external electronic device 200 through the second power supply 160) may be performed even when only the first power is received through the first power supply 150..

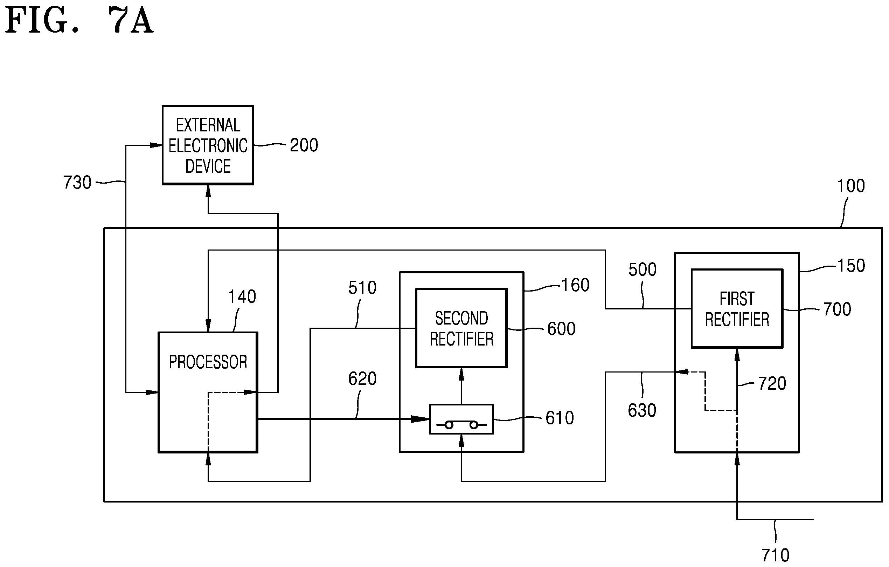

A configuration and operation of the first power supply 150 will now be described later with reference to FIGS. 5 and 7A.

According to an embodiment of the disclosure, the second power supply 160 may provide the second power to the external electronic device 200 under a control by the at least one processor 140. According to an embodiment of the disclosure, the second power supply 160 may be connected to the external power source, and transmit the second power to the external electronic device 200, based on the power received from the external power source.

According to an embodiment of the disclosure, the second power supply 160 may be electrically connected to the first power supply 150, and may transmit the second power to the external electronic device 200, based on power received from the external power source through the first power supply 150. According to an embodiment of the disclosure, the second power supply 160 may include an SMPS.

According to an embodiment of the disclosure, the second power supply 160 may be charged by receiving power from the external power source, and may transmit the charged power to the external electronic device 200. According to an embodiment of the disclosure, even when the second power supply 160 is not connected to the external power source, the second power supply 160 may transmit pre-charged power to the external electronic device 200. According to an embodiment of the disclosure, the second power supply 160 may include a battery.

According to an embodiment of the disclosure, the second power supply 160 may be a component for transmitting the second power to the external electronic device 200. The power received by the second power supply 160 from the external power source may be used to transmit the second power to the external electronic device 200.

According to an embodiment of the disclosure, the power received by the second power supply 160 from the external power source via the first power supply 150 may be used to perform an operation of the external electronic device 200 rather than an operation of the electronic device 100.

A configuration and operation of the second power supply 160 will now be described later with reference to FIGS. 5 and 7A.

According to an embodiment of the disclosure, the input/output interface 120 may electrically connect the external electronic device 200 to the electronic device 100 under a control by the at least one processor 140. According to an embodiment of the disclosure, the at least one processor 140 may receive at least one of image data or audio data from the external electronic device 200 through the input/output interface 120. The at least one processor 140 may be electrically connected to the external electronic device 200 through the input/output interface 120, and thus may perform an operation by using an OS or the like included in the external electronic device 200.

According to an embodiment of the disclosure, the input/output interface 120 may perform an input/output operation with the external electronic device 200 by using at least one of input/output methods including a High-Definition Multimedia Interface (HDMI) port, a Digital Visual Interface (DVI), a component jack, a PC port, or a Universal Serial Bus (USB) port. However, the disclosure is not limited to the aforementioned input/output methods.

According to an embodiment of the disclosure, the electronic device 100 may further include a communication interface. According to an embodiment of the disclosure, the communication interface may perform data communication with the external electronic device 200 or an external server under a control by the at least one processor 140. The communication interface may perform data communication with the external electronic device 200 or the external server by using at least one of data communication methods including, for example, a wired LAN, a wireless LAN, Wi-Fi, Bluetooth, Zigbee, Wi-Fi Direct (WFD), infrared communication (IrDA), Bluetooth Low Energy (BLE), Near Field Communication (NFC), Wireless Broadband Internet (Wibro), World Interoperability for Microwave Access (WiMAX), a shared wireless access protocol (SWAP), Wireless Gigabit Alliance (WiGig), and RF communication.

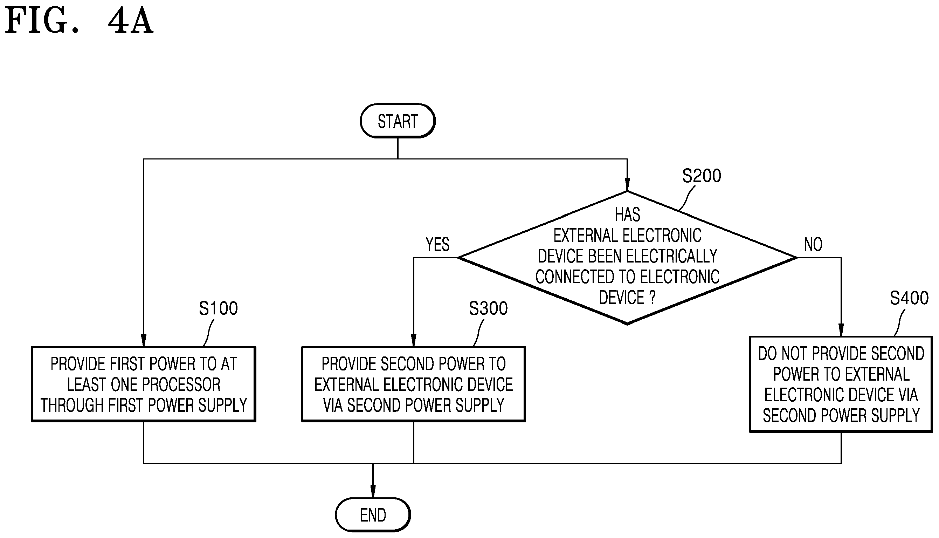

FIG. 4A is a flowchart for explaining an operation of the electronic device 100 according to an embodiment of the disclosure.

Referring to FIGS. 1, 3, and 4A, according to an embodiment of the disclosure, an operation method of the electronic device 100 may include an operation S100 of providing the first power to the electronic device 100 through the first power supply 150, based on the power received from the external power source. According to an embodiment of the disclosure, in operation S100 of providing the first power to the electronic device 100, the at least one processor 140 may provide the first power to the electronic device 100 through the first power supply 150, based on the power received from the external power source, by executing the instructions or program code of the power control module 134.

According to an embodiment of the disclosure, in operation S100 of providing the first power to the electronic device 100, the at least one processor 140 may provide, to the electronic device 100, first power rectified to a direct current through a first rectifier 700 (see FIG. 7A) included in the first power supply 150. An operation of the electronic device 100 may be performed via the received first power. The at least one processor 140 may operate the electronic device 100 by using the first power provided through the first power supply 150.

According to an embodiment of the disclosure, the operation method of the electronic device 100 may include an operation S200 of determining whether the external electronic device 200 has been electrically connected to the electronic device 100. According to an embodiment of the disclosure, in operation S200 of determining whether the external electronic device 200 has been electrically connected to the electronic device 100, the at least one processor 140 may determine whether the external electronic device 200 has been electrically connected to the electronic device 100, by executing the instructions or program code of the connection determination module 131.

According to an embodiment of the disclosure, as it is determined that the external electronic device 200 has been electrically connected to the electronic device 100, the operation method of the electronic device 100 may include an operation S300 of providing the second power to the external electronic device 200 via the second power supply 160, based on the power received from the external power source. According to an embodiment of the disclosure, as the external electronic device 200 is electrically connected to the electronic device 100, the at least one processor 140 may provide the second power to the external electronic device 200 through the second power supply 160, based on the power received from the external power source.

According to an embodiment of the disclosure, in operation S300 of providing the second power to the external electronic device 200 through the second power supply 160, the at least one processor 140 may turn on the switching unit 610 (see FIG. 6) included in the second power supply 160. According to an embodiment of the disclosure, in operation S300 of providing the second power to the external electronic device 200, the at least one processor 140 may provide, to the external electronic device 200, second power rectified to a direct current through a second rectifier 600 (see FIG. 6) included in the second power supply 160.

However, the disclosure is not limited thereto. In operation S300 of providing the second power to the external electronic device 200, the at least one processor 140 may provide second power of an alternating current component to the external electronic device 200 through the second power supply 160. The at least one processor 140 may provide second power of an alternating current component received from the external power source through the first power supply 150 to the external electronic device 200 through the second power supply 160. In this case, the second power of the alternating current component may be rectified to a direct current and used in the external electronic device 200.

According to an embodiment of the disclosure, as it is determined that the external electronic device 200 has not been electrically connected to the electronic device 100, the operation method of the electronic device 100 may include an operation S400 of stopping provision of the second power to the external electronic device 200 via the second power supply 160. According to an embodiment of the disclosure, the operation S400 of stopping provision of the second power to the external electronic device 200 via the second power supply 160 may be referred to as an operation S400 of not providing the second power to the external electronic device 200 via the second power supply 160.

According to an embodiment of the disclosure, as the external electronic device 200 is electrically connected to the electronic device 100, the at least one processor 140 may stop providing the second power to the external electronic device 200 through the second power supply 160. The stopping of the provision of the second power may refer to blocking provision of the second power provided to the external electronic device 200 through the second power supply 160.

According to an embodiment of the disclosure, in operation S400 of stopping providing the second power to the external electronic device 200 through the second power supply 160, the at least one processor 140 may turn-off the switching unit 610 included in the second power supply 160. As the external electronic device 200 is not electrically connected to the electronic device 100, the at least one processor 140 may not provide the second power to the external electronic device 200 through the second power supply 160.

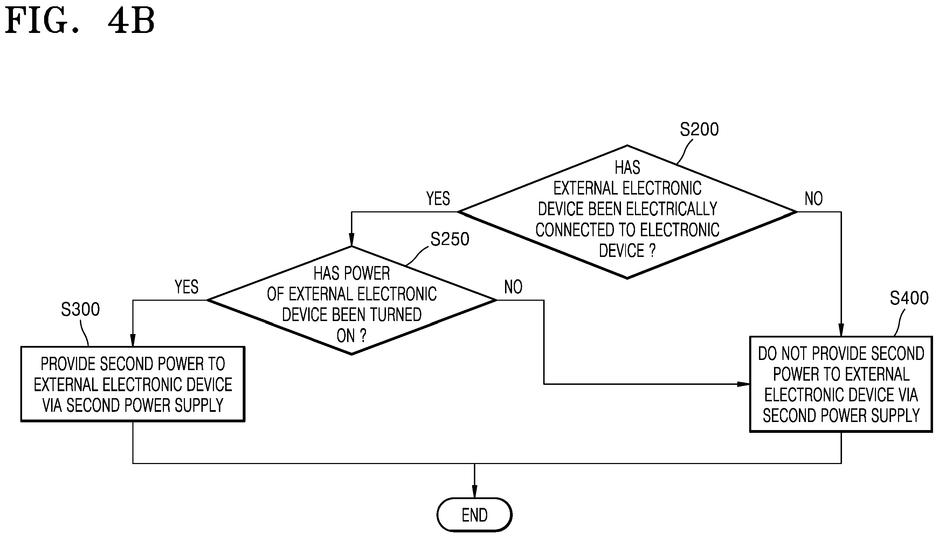

FIG. 4B is a flowchart for explaining an operation according to whether the power of the external electronic device is turned on or turned off, according to an embodiment of the disclosure. Operations that are the same as those described above with reference to FIG. 4A are given the same reference numerals, and thus redundant descriptions thereof will be omitted.

Referring to FIGS. 3, 4A, and 4B, according to an embodiment of the disclosure, the operation method of the electronic device 100 may further include an operation S250 of determining whether the power of the external electronic device 200 has been turned on or turned off. According to an embodiment of the disclosure, the operation S250 of determining whether the power of the external electronic device 200 has been turned on or turned off may be performed after the operation S200 of determining whether the external electronic device 200 has been electrically connected to the electronic device 100.

According to an embodiment of the disclosure, the operation S250 of determining whether the power of the external electronic device 200 has been turned on or turned off may be performed as it is determined that the external electronic device 200 has been electrically connected to the electronic device 100.

However, the disclosure is not limited thereto, and the operation S250 of determining whether the power of the external electronic device 200 has been turned on or turned off may be performed simultaneously with or separately from the operation S200 of determining whether the external electronic device 200 has been electrically connected to the electronic device 100.

According to an embodiment of the disclosure, in operation S250 of determining whether the power of the external electronic device 200 has been turned on or turned off, the at least one processor 140 may determine a state of the power of the external electronic device 200 by executing the instructions or program code of the power determination module 132.

According to an embodiment of the disclosure, as (or when ?) it is determined that the power of the external electronic device 200 has been turned on, the operation method of the electronic device 100 may include an operation S300 of providing the second power to the external electronic device 200 through the second power supply 160, based on the power received from the external power source.

According to an embodiment of the disclosure, when it is determined in operation S250 that the power of the external electronic device 200 has been turned on, the at least one processor 140 may turn on the switching unit 610 included in the second power supply 160.

According to an embodiment of the disclosure, in operation S300 of providing the second power to the external electronic device 200, the at least one processor 140 may provide, to the external electronic device 200, second power rectified to a direct current through the second rectifier 600 included in the second power supply 160.

According to an embodiment of the disclosure, as it is determined that the power of the external electronic device 200 has been turned off, the operation method of the electronic device 100 may include an operation S400 of stopping provision of the second power to the external electronic device 200 via the second power supply 160.

According to an embodiment of the disclosure, when it is determined in operation S250 that the power of the external electronic device 200 has been turned off, the at least one processor 140 may turn off the switching unit 610 included in the second power supply 160.

FIG. 5 is a block diagram for explaining an operation and effect of the electronic device 100 according to an embodiment of the disclosure. FIG. 6 is a block diagram for explaining a configuration and operation of the second power supply 160 according to an embodiment of the disclosure. Components that are the same as those described above with reference to FIG. 2 are given the same reference numerals, and thus redundant descriptions thereof will be omitted.

Referring to FIGS. 2 and 5, according to an embodiment of the disclosure, a conventional electronic device 400 including a conventional power supply 410 and a conventional processor 420 is shown in FIG. 5 for explanation purposes. The conventional power supply 410 may be configured to provide first power 500 that is to be provided to the conventional electronic device 400 and second power 510 that is to be provided to the external electronic device 200 electrically connected to the conventional electronic device 400.

The conventional power supply 410 may provide the first power 500 to the conventional electronic device 400 and provide the second power 510 to the external electronic device 200, based on the power received from the external power source. The conventional power supply 410 may include an SMPS. The conventional power supply 410 may rectify power of an alternating current component received from the external power source to power of a direct current component, and thus may provide the first power 500 to the conventional electronic device 400 and provide the second power 510 to the external electronic device 200.

At this time, even when the external electronic device 200 is not electrically connected to the conventional electronic device 400, or the power of the external electronic device 200 is turned off and thus the external electronic device 200 is not used in an operation of the conventional electronic device 400, the conventional power supply 410 may rectify the power of an AC component power received from the external power source in order to supply the power of a DC component to the conventional electronic device 400. Accordingly, there were cases where total power consumption or total standby power of the conventional electronic device 400 was unnecessarily increased.

In contrast, referring to FIGS. 5 and 6, the electronic device 100 according to an embodiment of the disclosure may include the first power supply 150 for providing the first power to the electronic device 100, the second power supply 160 for provide the second power to the external electronic device 200, and the at least one processor 140.

According to an embodiment of the disclosure, the first power supply 150 may include the first rectifier 700 of FIG. 7A. According to an embodiment of the disclosure, the first rectifier 700 may rectify the power of the alternating current component received from the external power source into the power of the direct current component and transmit the power of the direct current component as the first power 500 to the electronic device 100. The first power may refer to power rectified into a direct current component.

According to an embodiment of the disclosure, the second power supply 160 may include the second rectifier 600. According to an embodiment of the disclosure, the second rectifier 600 may rectify power 630 of an alternating current component received from the external power source via the first power supply 150 into power 510 of a direct current component and transmit the power of the direct current component as the second power 510 to the external electronic device 200. The second power 510 may refer to power 510 rectified into a direct current component.

According to an embodiment of the disclosure, the second power supply 160 may include the switching unit 610. The second rectifier 600 may be electrically connected to the first power supply 150 through the switching unit 610. According to an embodiment of the disclosure, the at least one processor 140 may generate a control signal 620 for controlling the turn-on or turn-off operation of the switching unit 610 through the switching control module 133. The at least one processor 140 may turn on or turn off the switching unit 610, based on the control signal 620. The switching unit 610 may be implemented as an analog switch integrated circuit (IC), a transistor-based switch (e.g., a metal-oxide-semiconductor field-effect transistor (MOSFET) or a bipolar junction transistor (BJT)) or a relay switch (e.g., an electromechanical relay or a solid-state relay (SSR)), while various other options are available.

According to an embodiment of the disclosure, when the external electronic device 200 has not been electrically connected to the electronic device 100 or the power of the external electronic device 200 has been turned off, the at least one processor 140 may turn off the switching unit 610. Accordingly, provision of power of an alternating current component from the external power source to the second rectifier 600 through the first power supply 150 may be stopped.

In this case, the first power supply 150 may need only power of an alternating current component for transmitting the first power 500 of a direct current component from the external power source to the electronic device 100. Accordingly, an unnecessary increase in the total power consumption or total standby power of the electronic device 100 may be prevented.

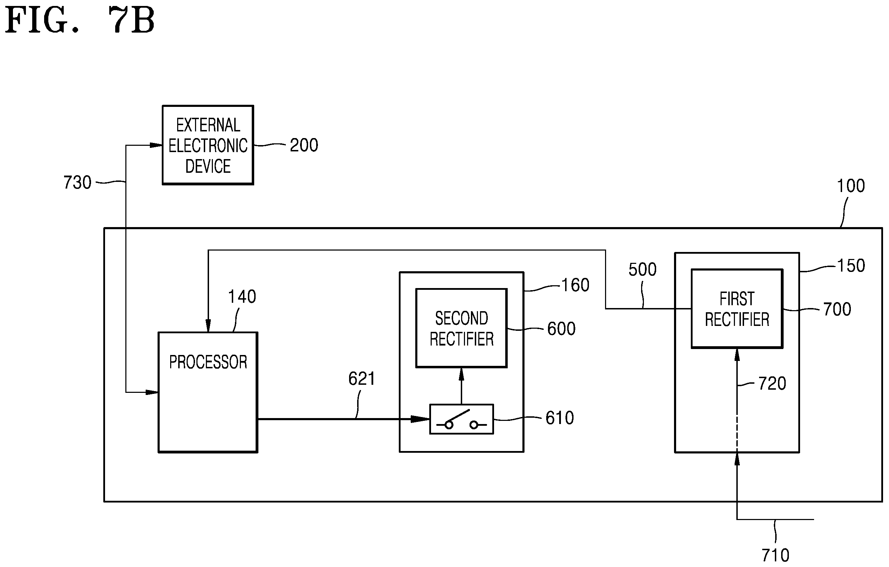

FIG. 7A is a block diagram for explaining an operation when power is provided to the external electronic device 200 via the second power supply 160, according to an embodiment of the disclosure. FIG. 7B is a block diagram for explaining an operation when provision of power to the external electronic device 200 via the second power supply 160 is stopped, according to an embodiment of the disclosure. Components that are the same as those described above with reference to FIGS. 3 and 6 are given the same reference numerals, and thus redundant descriptions thereof will be omitted.

Referring to FIGS. 3, 4A, and 7A, according to an embodiment of the disclosure, power 710 may be supplied from the external power source to the first power supply 150. Power 710 provided from the external power source to the first power supply 150 may be a sum of power 720 for the first power 500 provided to the at least one processor 140 through the first power supply 150 and the power 630 for the second power 510 provided to the second power supply 160 through the first power supply 150 and thus provided to the external electronic device 200.

For convenience of explanation, the power 710 provided from the external power source to the first power supply 150 may be referred to as first input power 710. The power 720 for providing the first power 500 to the at least one processor 140 through the first power supply 150 may be referred to as second input power 720. The power 630 provided to the second power supply 160 in order to provide the second power 510 to the external electronic device 200 through the first power supply 150 may be referred to as third input power 630.

According to an embodiment of the disclosure, the first power supply 150 may provide the first power 500 to the at least one processor 140, based on the second input power 720. In FIG. 7A, the first power supply 150 is shown as providing the first power 500 to the at least one processor 140. However, the disclosure is not limited thereto. The first power 500 may be power for driving the electronic device 100. The first power supply 150 may provide the first power 500 to the electronic device 100.

According to an embodiment of the disclosure, the first power supply 150 may include the first rectifier 700. Each of the first input power 710, the second input power 720, and the third input power 630 may be power of an alternating current component. The first rectifier 700 may rectify the second input power 720 into a direct current component and transmit power of the direct current component as the first power 500 to theat least one processor 140.

According to an embodiment of the disclosure, the second power supply 160 may include the second rectifier 600 and the switching unit 610. According to an embodiment of the disclosure, the first power supply 150 and the second power supply 160 may be different components. According to an embodiment of the disclosure, the first power supply 150 and the second power supply 160 may be physically distinguished from each other.

According to an embodiment of the disclosure, the at least one processor 140 may determine whether the external electronic device 200 has been electrically connected to the electronic device 100. In FIG. 7A, the external electronic device 200 is shown as being connected to the at least one processor 140 through an input/output interface 730. However, the disclosure is not limited thereto. According to an embodiment of the disclosure, the external electronic device 200 may be electrically connected to the at least one processor 140 through the other components of the electronic device 100.

According to an embodiment of the disclosure, the at least one processor 140 may determine whether the power of the external electronic device 200 has been turned on or turned off. An operation, performed by the at least one processor 140, of determining whether the external electronic device 200 and the electronic device 100 have been electrically connected to each other and a state of the power of the external electronic device 200 will be described later with reference to FIG. 8.

According to an embodiment of the disclosure, as it is determined that the external electronic device 200 has been electrically connected to the electronic device 100 and the power of the external electronic device 200 has been turned on, the at least one processor 140 may generate the control signal 620 for turning on the switching unit 610. The at least one processor 140 may turn on the switching unit 610, based on the generated control signal 620.

According to an embodiment of the disclosure, as the switching unit 610 is turned on, the first power supply 150 and the second power supply 160 may be electrically connected to each other, and the external power source may provide the first input power 710, which is a sum of the second input power supply 720 and the third input power 630, to the first power supply 150. According to an embodiment of the disclosure, the second power supply 160 may obtain the third input power 630 from the external power source via the first power supply 150.

According to an embodiment of the disclosure, the second rectifier 600 may rectify the third input power 630 received via the switching unit 610 into a direct current component and transmit power of the direct current component as the second power 510 to the external electronic device 200. In FIG. 7A, the second power 510 is shown as being transmitted to the external electronic device 200 via the at least one processor 140. However, the disclosure is not limited thereto. According to an embodiment of the disclosure, the second power 510 may be transmitted to the external electronic device 200 through another component of the electronic device 100 or an input/output interface for power transmission.

Although the second power supply 160 includes the second rectifier 600 in FIG. 7A, the disclosure is not limited thereto. The second power supply 160 may include only the switching unit 610 and may not include a second rectifier.

In this case, the second power supply 160 may transmit the third input power 630 of an alternating current component received from the external power source through the first power supply 150 to the external electronic device 200. At this time, the third input power 630 of the alternating current component may be provided as the second power 510 to the external electronic device 200. The at least one processor 140 may provide the second power 510 of an alternating current component to the external electronic device 200 through the second power supply 160.

Referring to FIGS. 7A and 7B, according to an embodiment of the disclosure, FIG. 7B illustrates that, as it is determined that the external electronic device 200 has not been electrically connected to the electronic device 100, the at least one processor 140 generates a control signal 621 for turning off the switching unit 610. As it is determined that the external electronic device 200 has been electrically connected to the electronic device 100 but the power of the external electronic device 200 has been turned off, the at least one processor 140 may generate the control signal 621 for turning off the switching unit 610.

According to an embodiment of the disclosure, as the switching unit 610 is turned off, the first power supply 150 and the second power supply 160 may not be electrically connected to each other. The first input power 710 provided by the external power source to the first power supply 150 may have the same magnitude as the second input power 720. According to an embodiment of the disclosure, the first rectifier 700 may rectify the second input power 720 into a direct current component and provide power of the direct current component as the first power 500 to the at least one processor 140.

According to an embodiment of the disclosure, the second rectifier 600 included in the second power supply 160 may not be electrically connected to the first power supply 150 by the turned-off switching unit 610. Accordingly, provision of power of an alternating current component from the external power source to the second power supply 160 through the first power supply 150 may be stopped.

According to an embodiment of the disclosure, as it is determined that the external electronic device 200 has not been electrically connected to the electronic device 100 or the power of the external electronic device 200 has been turned off, the electronic device 100 may enable the switching unit 610 to be turned off so that the second power supply 160 for providing power to the external electronic device 200 may not be electrically connected to the first power supply 150 for supplying power to the electronic device 100.

Accordingly, the total power consumption or total standby power of the electronic device 100 may be prevented from unnecessarily increasing in order to provide power to the external electronic device 200. In detail, power of an alternating current component may be prevented from being unnecessarily provided to the second rectifier 600 included in the second power supply 160, and thus power loss may be prevented from occurring in a process of rectifying the power of an alternating current component into power of a direct current component.

According to an embodiment of the disclosure, when the external electronic device 200 has not been electrically connected to the electronic device 100 or the power of the external electronic device 200 has been turned off, the external power source may provide only the second external power 720 required by the first power supply 150 to the electronic device 100. Accordingly, the total power consumption or total standby power of the electronic device 100 may be efficiently managed.

FIG. 8 is a block diagram for explaining an operation of determining connection or non-connection of the external electronic device 200 and whether the power of the external electronic device 200 is turned on or turned off, according to an embodiment of the disclosure. Components that are the same as those described above with reference to FIGS. 3 and 7A are given the same reference numerals, and thus redundant descriptions thereof will be omitted.

Referring to FIGS. 3, 7A, and 8, according to an embodiment of the disclosure, a first input/output interface 731 and a second input/output interface 732 connecting the external electronic device 200 and the electric device 100 are shown in FIG. 8. Although the first input/output interface 731 and the second input/output interface 732 are separately illustrated in FIG. 8, the disclosure is not limited thereto. According to an embodiment of the disclosure, the first input/output interface 731 and the second input/output interface 732 may be components included in a single interface.

In FIG. 8, the external electronic device 200 is connected to the electric device 100 from outside the electronic device 100. However, the disclosure is not limited thereto. Referring to FIGS. 2 and 8, the external electronic device 200 may be mounted on the electronic device 100 through a slot included in the electronic device 100, and the first input/output interface 731 and the second input/output interface 732 may connect the electronic device 100 with the external electronic device 200 mounted through the slot.

According to an embodiment of the disclosure, one end of the first input/output interface 731 may be electrically connected to a ground terminal electrically connected to a ground power supply of the external electronic device 200. According to an embodiment of the disclosure, the other end of the first input/output interface 731 may be electrically connected to the at least one processor 140 included in the electronic device 100. In detail, the other end of the first input/output interface 731 may be electrically connected to a first terminal of the at least one processor 140. In this case, the first terminal may include a general purpose input output (GPIO) pin.

According to an embodiment of the disclosure, a voltage level of the first terminal configured to be electrically connected to the other end of the first input/output interface 731 may be set to be a high value while the first terminal is not being electrically connected to the outside. The high value may refer to a value greater than an arbitrary reference value, and may refer to "1", which is a digital value. According to an embodiment of the disclosure, any reference value may be a value greater than 0.

According to an embodiment of the disclosure, when the first end is electrically connected to the ground terminal of the external electronic device 200 through the first input/output interface 731, the voltage level of the first terminal may have a low value. The low value may refer to a value that is electrically connected to the ground terminal and is less than the arbitrary reference value, and may refer to "0", which is a digital value.

According to an embodiment of the disclosure, the at least one processor 140 may determine whether the external electronic device 200 has been electrically connected to the electronic device 100, based on a voltage level of the GPIO pin. When the voltage level of the first terminal has a high value, the at least one processor 140 may determine that the external electronic device 200 has not been electrically connected to the electronic device 100. When the voltage level of the first terminal has a low value, the at least one processor 140 may determine that the external electronic device 200 has been electrically connected to the electronic device 100.

According to an embodiment of the disclosure, one end of the second input/output interface 732 may be electrically connected to a terminal that provides a state of whether the power of the external electronic device 200 has been turned on or off. According to an embodiment of the disclosure, the other end of the second input/output interface 732 may be electrically connected to the at least one processor 140 included in the electronic device 100. In detail, the other end of the second input/output interface 732 may be electrically connected to a second terminal of the at least one processor 140. The terminal that provides a state of whether the power of the external electronic device 200 has been turned on or off may be a terminal defined by the OPS. The second terminal may include a GPIO pin.

According to an embodiment of the disclosure, the at least one processor 140 may determine whether the external electronic device 200 has been turned on or turned off, based on power information including information about the power state of the external electronic device 200 provided through the second terminal. According to an embodiment of the disclosure, the power information provided through the second terminal may include information about whether the external electronic device 200 has been turned on or off according to the OPS. However, the disclosure is not limited thereto, and, when the external electronic device 200 is turned on, the power information may have a high value, and, when the external electronic device 200 is turned off, the power information may have a low value.

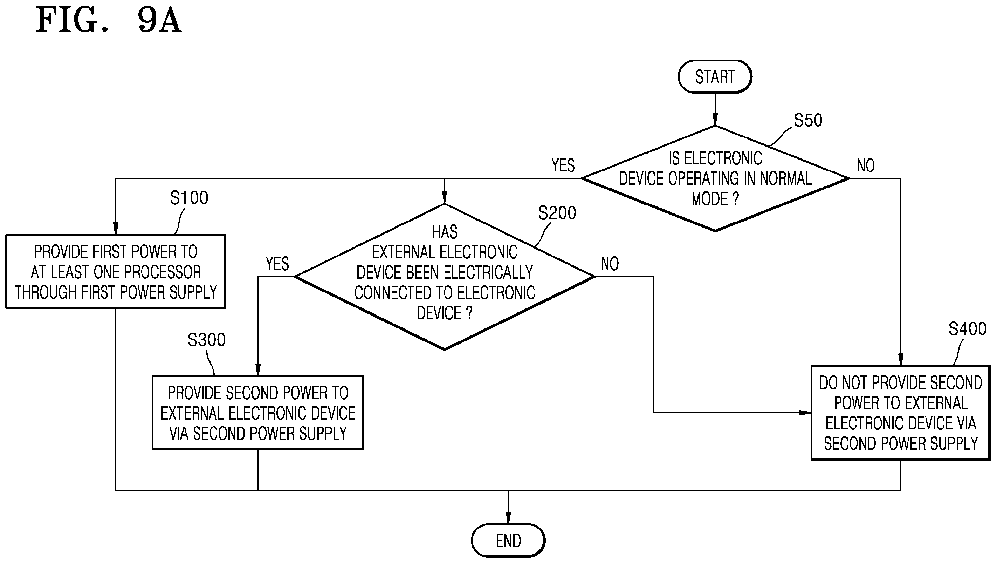

FIG. 9A is a flowchart for explaining an operation according to a normal mode or standby mode of the electronic device 100, according to an embodiment of the disclosure. Operations that are the same as those described above with reference to FIG. 4A are given the same reference numerals, and thus redundant descriptions thereof will be omitted.

Referring to FIGS. 1, 3, 4A, and 9A, according to an embodiment of the disclosure, the operation method of the electronic device 100 may include an operation S50 of determining whether the electronic device 100 is operating in the normal mode or in the standby mode.

According to an embodiment of the disclosure, the normal mode may refer to a mode in which the electronic device 100 provides the content 300 via the display 110. According to an embodiment of the disclosure, the normal mode may refer to a mode in which the electronic device 100 operates by receiving power consumption from the external power source. The normal mode may be also referred to as standard operational mode or active mode.

According to an embodiment of the disclosure, the standby mode may refer to a mode in which the electronic device 100 does not provide the content 300 via the display 110. According to an embodiment of the disclosure, the standby mode may refer to a mode in which the electronic device 100 is not used for a long time and thus the content 300 is not displayed on the display 110. According to an embodiment of the disclosure, the standby mode may refer to a mode in which the electronic device 100 operates by receiving standby power from the external power source.

According to an embodiment of the disclosure, in operation S50 of determining whether the electronic device 100 is operating in a normal mode or a standby mode, the at least one processor 140 may determine whether the electronic device 100 is operating in the normal mode or standby mode, based on a currently-being-executed program or content.

According to an embodiment of the disclosure, as it is determined that the electronic device 100 is operating in the normal mode, the operation method of the electronic device 100 may include an operation S100 of providing the first power to the electronic device 100 via the first power supply 150. According to an embodiment of the disclosure, in operation S100 of providing the first power to the electronic device 100, the at least one processor 140 may provide the first power to the electronic device 100 through the first power supply 150.

As it is determined that the electronic device 100 is operating in the normal mode, the operation method of the electronic device 100 may include an operation S200 of determining whether the external electronic device 200 has been electrically connected to the electronic device 100. According to an embodiment of the disclosure, in operation S200 of determining whether the external electronic device 200 has been electrically connected to the electronic device 100, the at least one processor 140 may determine whether the external electronic device 200 has been electrically connected to the electronic device 100.

According to an embodiment of the disclosure, as it is determined that the external electronic device 200 has been electrically connected to the electronic device 100, the operation method of the electronic device 100 may include an operation S300 of providing the second power to the external electronic device 200 via the second power supply 160. According to an embodiment of the disclosure, in operation S300 of providing the second power to the external electronic device 200, the at least one processor 140 may provide the second power to the external electronic device 200 via the second power supply 160.

According to an embodiment of the disclosure, as it is determined that the external electronic device 200 has not been electrically connected to the electronic device 100, the operation method of the electronic device 100 may include an operation S400 of stopping provision of the second power to the external electronic device 200 via the second power supply 160.

According to an embodiment of the disclosure, as it is determined in operation S50 that the electronic device 100 is operating in the standby mode, the operation method of the electronic device 100 may include an operation S400 of stopping provision of the second power to the external electronic device 200 via the second power supply 160.

According to an embodiment of the disclosure, in operation S400 of stopping provision of the second power to the external electronic device 200, the provision of the second power by the at least one processor 140 to the external electronic device 200 through the second power supply 160 may be stopped.

According to an embodiment of the disclosure, because the electronic device 100 does not provide the content 300 through the display 110 in the standby mode, the electronic device 100 may not receive data, such as a still image, a video, or an audio signal, from the external electronic device 200. In order to display the content 300, the electronic device 100 does not need to be operated using an OS included in the external electronic device 200. Accordingly, because there is no need to drive the external electronic device 200, provision of the second power to the external electronic device 200 may be stopped. According to an embodiment of the disclosure, as it is determined that the electronic device 100 is operating in the standby mode, the at least one processor 140 may turn off the switching unit 610 of FIG. 7B and may not provide the second power to the external electronic device 200 via the second power supply 160.

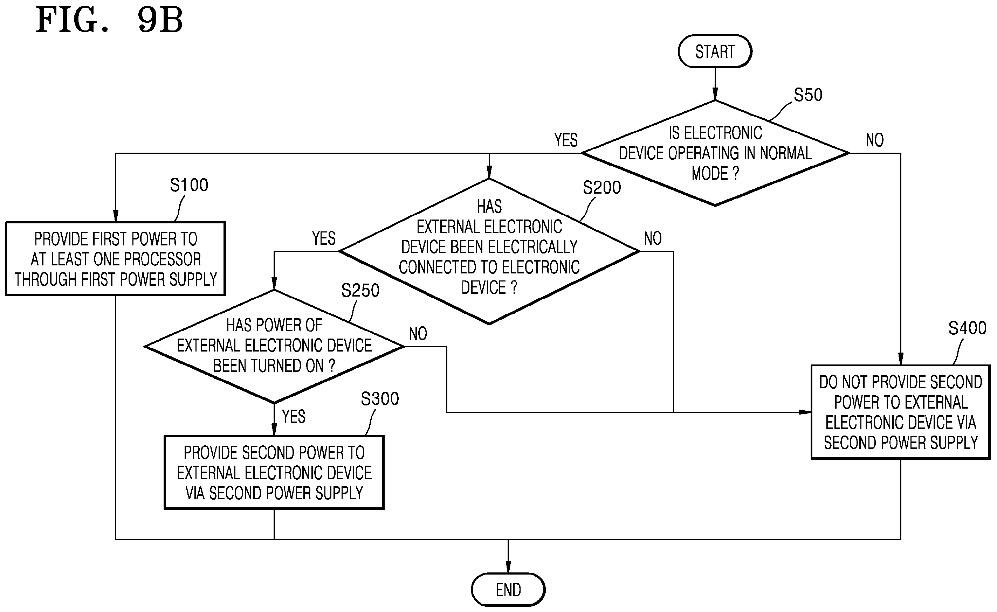

FIG. 9B is a flowchart for explaining an operation according to a normal mode or standby mode of the electronic device 100, according to an embodiment of the disclosure. Operations that are the same as those described above with reference to FIGS. 4A, 4B, and 9A are given the same reference numerals, and thus redundant descriptions thereof will be omitted.

Referring to FIGS. 1, 3, 4B, and 9B, according to an embodiment of the disclosure, the operation method of the electronic device 100 may include an operation S50 of determining whether the electronic device 100 is operating in the normal mode or in the standby mode.

According to an embodiment of the disclosure, as it is determined in operation S50 that the electronic device 100 is operating in the normal mode, the operation method of the electronic device 100 may include an operation S100 of providing the first power to the electronic device 100 via the first power supply 150.

According to an embodiment of the disclosure, as it is determined in operation S50 that the electronic device 100 is operating in the normal mode, the operation method of the electronic device 100 may include an operation S200 of determining whether the external electronic device 200 has been electrically connected to the electronic device 100.

According to an embodiment of the disclosure, as it is determined that the external electronic device 200 has been electrically connected to the electronic device 100, the operation method of the electronic device 100 may include an operation S250 of determining whether the external electronic device 200 has been turned on. According to an embodiment of the disclosure, in operation S250 of determining whether the power of the external electronic device 200 has been turned on, the at least one processor 140 may determine whether the power of the external electronic device 200 has been turned on or turned off.

According to an embodiment of the disclosure, as it is determined that the power of the external electronic device 200 has been turned on, the operation method of the electronic device 100 may include an operation S300 of providing the second power to the external electronic device 200 via the second power supply 160. According to an embodiment of the disclosure, in operation S300 of providing the second power to the external electronic device 200, the at least one processor 140 may provide the second power to the external electronic device 200 through the second power supply 160.

According to an embodiment of the disclosure, as it is determined that the power of the external electronic device 200 has been turned off, the operation method of the electronic device 100 may include an operation S400 of stopping provision of the second power to the external electronic device 200 via the second power supply 160.

According to an embodiment of the disclosure, as it is determined in operation S50 that the electronic device 100 is operating in the standby mode, the operation method of the electronic device 100 may include an operation S400 of stopping provision of the second power to the external electronic device 200 via the second power supply 160.

According to an embodiment of the disclosure, in operation S400 of stopping provision of the second power to the external electronic device 200, the at least one processor 140 may not provide the second power to the external electronic device 200 through the second power supply 160.

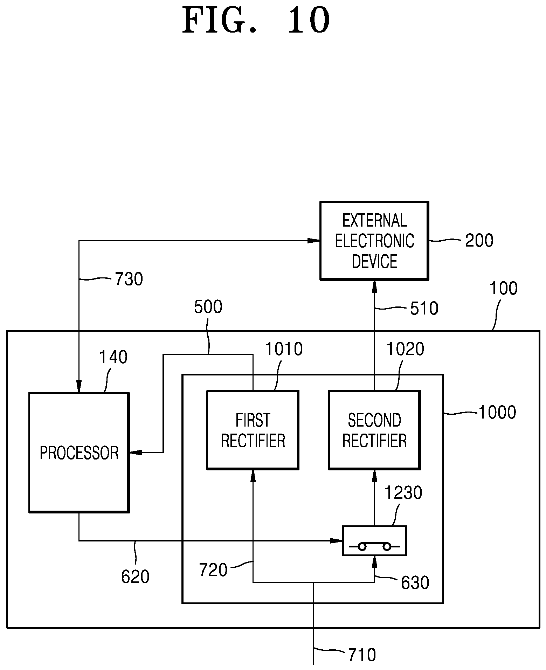

FIG. 10 is a block diagram for explaining a power supply for providing power to an electronic device and an external electronic device, according to an embodiment of the disclosure. Components that are the same as those described above with reference to FIG. 7A are given the same reference numerals, and thus redundant descriptions thereof will be omitted.

Referring to FIGS. 3, 7A, and 10, according to an embodiment of the disclosure, the electronic device 100 shown in FIG. 10 may include a power supply 1000 and the at least one processor 140. For convenience of explanation, the electronic device 100 is shown in FIG. 10 as including the power supply 1000 and the at least one processor 140. However, the electronic device 100 may further include other configurations, such as the display 110 and the memory 130.

According to an embodiment of the disclosure, the power supply 1000 of FIG. 10 may include a first rectifier 1010, a second rectifier 1020, and a switching unit 1230. According to an embodiment of the disclosure, the power supply 1000 may provide the first power 500 to the at least one processor 140 and provide the second power 510 to the external electronic device 200, based on the power 710 received from the external power source.

According to an embodiment of the disclosure, the at least one processor 140 may be connected to the external electronic device 200 through the input/output interface 730. According to an embodiment of the disclosure, the at least one processor 140 may determine whether the external electronic device 200 has been electrically connected to the electronic device 100 and the power of the external electronic device 200 has been turned on or off, and may generate the control signal 620 for controlling a state of the switching unit 1230.

According to an embodiment of the disclosure, FIG. 10 illustrates that, because it is determined that the external electronic device 200 has been electrically connected to the electronic device 100 and the power of the external electronic device 200 has been turned on, the at least one processor 140 turns on the switching unit 1230 through the control signal 620.

According to an embodiment of the disclosure, as the switching unit 1230 is turned on, the first input power 710 of an alternating current component received by the power supply 1000 from the external power source may be a sum of the second input power 720 of an alternating current component for providing the first power 500 and the third input power 630 of an alternating current component for providing the second power 510.

According to an embodiment of the disclosure, the first rectifier 1010 may rectify the second input power 720 into a direct current component and provide power of the direct current component as the first power 500 to the at least one processor 140. The second rectifier 1020 may rectify the third input power 630 into a direct current component and provide power of the direct current component as the second power 510 to the external electronic device 200.

According to an embodiment of the disclosure, when it is determined that the external electronic device 200 has been electrically connected to the electronic device 100 or the power of the external electronic device 200 has been turned off, the at least one processor 140 may turn off the switching unit 1230 through the control signal 620.

According to an embodiment of the disclosure, in this case, the size of the first input power 710 of an AC component received by the power supply 1000 from the external power source may be equal to the second input power 720. Because the second rectifier 1020 is not electrically connected to the first rectifier 1010 and the external power source by the turned-off switching unit 1230, provision of the second input power 720 of an alternating current component from the external power source to the second rectifier 1020 may be stopped.

Accordingly, when, the external electronic device 200 is not electrically connected to the electronic device 100 or the power of the external electronic device 200 is turned off and, thus, provision of power to the external electronic device 200 is not needed, unnecessary provision of power of an alternating current component to the second rectifier 600 may be prevented, so that the total power consumption or total standby power of the electronic device 100 may be efficiently managed.

Effects obtainable from the disclosure are not limited to the aforementioned technical effects, and other effects not mentioned will be clearly understood by a person skilled in the art to which the disclosure pertains from the following description.

To address the above-described technical problems, an embodiment of the disclosure provides an electronic device. The electronic device may include memory storing at least one instruction. The electronic device may include at least one processor. The electronic device may include a first power supply configured to provide first power to the at least one processor, based on power received from an external power source. The electronic device may include a second power supply configured to provide second power to an external electronic device, based on the power received from the external power source. When the at least one processor is configured to execute the at least one instruction stored in the memory, the electronic device may identify whether the external electronic device is electrically connected to the electronic device. Based on identifying that the at least one processor is configured to execute the at least one instruction stored in the memory, the electronic device may provide the second power to the external electronic device through the second power supply, as the external electronic device is electrically connected to the electronic device.

According to an embodiment of the disclosure, when the at least one processor is configured to execute the at least one instruction stored in the memory, the electronic device may stop providing the second power to the external electronic device through the second power supply, based on identifying that the external electronic device is not electrically connected to the electronic device.

According to an embodiment of the disclosure, the first power supply and the second power supply may be physically distinguished from each other.

According to an embodiment of the disclosure, the second power may include alternating current power.

According to an embodiment of the disclosure, the first power supply may include a first rectifier. The second power supply may include a second rectifier and a switching unit. The second rectifier may be electrically connected to the first power supply through the switching unit. When the at least one processor is configured to execute the at least one instruction stored in the memory, the electronic device may turn on the switching unit based on identifying that the external electronic device is electrically connected to the electronic device. When the at least one processor is configured to execute the at least one instruction stored in the memory, the electronic device may turn off the switching unit based on identifying that the external electronic device is not electrically connected to the electronic device.

According to an embodiment of the disclosure, when the at least one processor is configured to execute the at least one instruction stored in the memory, the electronic device may provide, to the at least one processor, the first power rectified to a direct current through the first rectifier. When the at least one processor is configured to execute the at least one instruction stored in the memory, the electronic device may provide, to the external electronic device, the second power rectified to a direct current through the second rectifier.

According to an embodiment of the disclosure, when the at least one processor is configured to execute the at least one instruction stored in the memory, the electronic device may operate the at least one processor by using the first power provided by the first power supply.

According to an embodiment of the disclosure, the electronic device may further include an input/output interface. When the at least one processor is configured to execute the at least one instruction stored in the memory, the electronic device may identify whether the external electronic device has been electrically connected to the electronic device, based on a voltage level of a first terminal of the input/output interface that is electrically connected to a ground terminal of the external electronic device.

According to an embodiment of the disclosure, when the at least one processor is configured to execute the at least one instruction stored in the memory, the electronic device may identify whether the external electronic device has been turned on or off. When the at least one processor is configured to execute the at least one instruction stored in the memory, the electronic device may provide the second power to the external electronic device through the second power supply, based on identifying that the external electronic device has been turned on. When the at least one processor is configured to execute the at least one instruction stored in the memory, the electronic device may stop providing the second power to the external electronic device through the second power supply, based on identifying that the external electronic device has been turned off.

According to an embodiment of the disclosure, the first power supply may include a first rectifier. The second power supply may include a second rectifier and a switching unit. The second rectifier may be electrically connected to the first power supply through the switching unit. When the at least one processor is configured to execute the at least one instruction stored in the memory, the electronic device may turn on the switching unit based on identifying that the external electronic device has been turned on. When the at least one processor is configured to execute the at least one instruction stored in the memory, the electronic device may turn off the switching unit based on identifying that the external electronic device has been turned off.

According to an embodiment of the disclosure, the electronic device may further include an input/output interface. When the at least one processor is configured to execute the at least one instruction stored in the memory, the electronic device may identify whether the external electronic device has been turned on or turned off, based on power information provided through a second terminal of the input/output interface that is electrically connected to a terminal of the external electronic device configured to provide a power state of the external electronic device.

According to an embodiment of the disclosure, the electronic device may further include a display that displays content. The external electronic device may be an electronic device following an open pluggable specification (OPS).

To address the above-described technical problems, an embodiment of the disclosure provides an operation method of an electronic device. The operation method of the electronic device may include providing first power to the at least one processor of the electronic device through a first power supply of the electronic device, based on power received from an external power source. The operation method of the electronic device may include identifying whether an external electronic device is electrically connected to the electronic device. The operation method of the electronic device may include, based on identifying that the external electronic device is electrically connected to the electronic device, providing second power to the external electronic device through a second power supply of the electronic device, based on the power received from the external power source.

The operation method of the electronic device may include, based on identifying that the external electronic device is not electrically connected to the electronic device, stopping provision of the second power to the external electronic device through the second power supply.

According to an embodiment of the disclosure, the first power supply and the second power supply may be physically distinguished from each other.

According to an embodiment of the disclosure, the second power may be include alternating current power.

According to an embodiment of the disclosure, in the providing of the second power to the external electronic device may be include truing on a switching unit of the second power supply. In the stopping of the providing of the second power to the external electronic device may be include turning off the switching unit.

According to an embodiment of the disclosure, in the providing of the first power, the first power rectified to a direct current through the first rectifier may be provided to the at least one processor. In the providing of the second power, the second power rectified to a direct current through the second rectifier may be provided to the external electronic device.

According to an embodiment of the disclosure, the determining of whether the external electronic device has been electrically connected to the electronic device may include determining whether the external electronic device has been electrically connected to the electronic device, based on a voltage of a first terminal of the input/output interface that is electrically connected to a ground terminal of the external electronic device.

According to an embodiment of the disclosure, the operation method of the electronic device may further include determining whether the power of the external electronic device has been turned on or off. The operation method of the electronic device may further include, as the power of the external electronic device has been turned on, providing the second power to the external electronic device through the second power supply. The operation method of the electronic device may further include, as the power of the external electronic device has been turned off, stopping provision of the second power to the external electronic device through the second power supply.

According to an embodiment of the disclosure, the first power supply may include a first rectifier, and the second power supply may include a second rectifier and a switching unit. The second rectifier may be electrically connected to the first power supply through the switching unit. In the providing of the second power to the external electronic device as the power of the external electronic device has been turned on, the switching unit may be turned on. In the providing of the second power to the external electronic device as the power of the external electronic device has been turned off, the switching unit may be turned off.

According to an embodiment of the disclosure, the determining of whether the power of the external electronic device has been turned on or off may include determining whether the power of the external electronic device has been turned on or turned off, based on power information provided through a second terminal of the input/output interface that is electrically connected to a terminal that provides a state of whether the power of the external electronic device has been turned on or off.

To address the above-described technical problems, provided is a computer-readable recording medium having recorded thereon a computer program, which, when executed by a computer, performs at least one of the above-disclosed operation methods of an electronic device.

The program executed by the electronic device described above herein may be implemented as a hardware component, a software component, and /or a combination of hardware components and software components. The program may be executed by any system capable of executing computer readable instructions.

The software may include a computer program, code, instructions, or a combination of one or more of the foregoing, and may constitute a processing device so that the processing device can operate as desired, or may independently or collectively instruction the processing device.

The software may be implemented as a computer program including instructions stored in computer-readable storage media. Examples of the computer-readable recording media include magnetic storage media (e.g., ROM, floppy disks, hard disks, etc.), and optical recording media (e.g., CD-ROMs, or digital versatile discs (DVDs)). The computer-readable recording media can be distributed over network coupled computer systems so that the computer-readable code is stored and executed in a distributive manner. These recording media can be read by the computer, stored in memory, and executed by a processor.

A computer-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory storage medium may include a buffer in which data is temporarily stored.

Programs according to various embodiments disclosed herein may be provided by being included in computer program products. The computer program product, which is a commodity, may be traded between sellers and buyers.

Computer program products may include a software program and a computer-readable storage medium having the software program stored thereon. For example, computer program products may include a product in the form of a software program (e.g., a downloadable application) that is electronically distributed through electronic device manufacturers or electronic markets (e.g., Samsung Galaxy Store). For electronic distribution, at least a portion of the software program may be stored on a storage medium or may be created temporarily. In this case, the storage medium may be a server of a manufacturer of an electronic device, a server of an electronic market, or a storage medium of a relay server for temporarily storing a software (SW) program.

While the disclosure has been particularly shown and described with reference to examples thereof, it will be understood by those of ordinary skill in the art that various changes in form and details may be made therein without departing from the spirit and scope of the disclosure as defined by the following claims. For example, an appropriate result may be attained even when the above-described techniques are performed in a different order from the above-described method, and/or components, such as the above-described computer system or module, are coupled or combined in a different form from the above-described methods or substituted for or replaced by other components or equivalents thereof.

## Claims

1. An electronic device comprising:
memory storing at least one instruction;
at least one processor;
a first power supply configured to provide first power to the at least one processor, based on power received from an external power source; and
a second power supply configured to provide second power to an external electronic device, based on the power received from the external power source,
wherein the at least one processor is configured to execute the at least one instruction stored in the memory to cause the electronic device to:
identify whether the external electronic device is electrically connected to the electronic device; and
based on identifying that the external electronic device is electrically connected to the electronic device, provide the second power to the external electronic device through the second power supply.

2. The electronic device of claim 1, wherein the at least one processor is configured to execute the at least one instruction stored in the memory to cause the electronic device to, based on identifying that the external electronic device is not electrically connected to the electronic device, stop providing the second power to the external electronic device through the second power supply.

3. The electronic device of any one of claim 1 or 2, wherein
the second power comprises alternating current power.

4. The electronic device of any one of claim 2 or 3, wherein
the first power supply comprises a first rectifier,
wherein the second power supply comprises a second rectifier and a switching unit,
wherein the second rectifier is electrically connected to the first power supply through the switching unit, and
wherein the at least one processor is configured to execute the at least one instruction stored in the memory to cause the electronic device to:
based on identifying that the external electronic device is electrically connected to the electronic device, turn on the switching unit; and
based on identifying that the external electronic device is not electrically connected to the electronic device, turn off the switching unit.

5. The electronic device of claim 4, wherein the at least one processor is configured to execute the at least one instruction stored in the memory to cause the electronic device to:
provide, to the at least one processor, the first power rectified to a direct current through the first rectifier; and
provide, to the external electronic device, the second power rectified to a direct current through the second rectifier.

6. The electronic device of claim 5, wherein the at least one processor is configured to execute the at least one instruction stored in the memory to cause the electronic device to operate the at least one processor by using the first power provided through the first power supply.

7. The electronic device of any one of claims 1 through 6, further comprising an input/output interface,
wherein the at least one processor is configured to execute the at least one instruction stored in the memory to cause the electronic device to identify whether the external electronic device has been electrically connected to the electronic device, based on a voltage of a first terminal of the input/output interface, wherein the first terminal is electrically connected to a ground terminal of the external electronic device.

8. The electronic device of any one of claims 1 through 7, wherein the at least one processor is configured to execute the at least one instruction stored in the memory to cause the electronic device to:
identify whether the external electronic device has been turned on or off;
based on identifying that the external electronic device has been turned on, provide the second power to the external electronic device through the second power supply; and
based on identifying that the external electronic device has been turned off, stop providing the second power to the external electronic device through the second power supply.

9. The electronic device of claim 8, wherein
the first power supply comprises a first rectifier,
wherein the second power supply comprises a second rectifier and a switching unit,
wherein the second rectifier is electrically connected to the first power supply through the switching unit, and
wherein the at least one processor is configured to execute the at least one instruction stored in the memory to cause the electronic device to:
based on identifying that the external electronic device has been turned on, turn on the switching unit; and
based on identifying that the external electronic device has been turned off, turn off the switching unit.

10. The electronic device of any one of claim 8 or 9, further comprising an input/output interface,
wherein the at least one processor is configured to execute the at least one instruction stored in the memory to cause the electronic device to identify whether the external electronic device has been turned on or turned off, based on power information provided through a second terminal of the input/output interface that is electrically connected to a terminal of the external electronic device configured to provide a power state of the external electronic device.

11. An operation method of an electronic device, the operation method comprising:
providing first power to at least one processor of the electronic device through a first power supply of the electronic device, based on power received from an external power source;
identifying whether an external electronic device is electrically connected to the electronic device; and
based on identifying that the external electronic device is electrically connected to the electronic device, providing second power to the external electronic device through a second power supply of the electronic device, based on the power received from the external power source.

12. The operation method of claim 11, further comprising, based on identifying that the external electronic device is not electrically connected to the electronic device, stopping provision of the second power to the external electronic device through the second power supply.

13. The operation method of any one of claim 11 or 12, wherein
the second power comprises alternating current power.

14. The operation method of any one of claim 12 or 13, wherein
wherein the providing the second power to the external electronic device further comprises turning on a switching unit of the second power supply; and
wherein the stopping provision of the second power to the external electronic device further comprises turning off the switching unit.

15. A computer-readable recording medium having recorded thereon a computer program, which, when executed by a computer, performs the method of one of claims 11 through 14.
